# EUROPÄISCHE PATENTSCHRIFT

(11) **EP 2 448 104 B1**
(45) Veröffentlichungstag und Bekanntmachung des Hinweises auf die Patenterteilung: **19.02.2020**
(21) Anmeldenummer: 11008285.6
(22) Anmeldetag: 13.10.2011
(51) Int. Cl.: H02P 3/18, H02P 29/032, B29C 45/76

(54) **System bestehend aus einer Kunststoffverarbeitungsmaschine und einem Peripheriegerät**
System comprising a plastic processing machine and a peripheral device
Système constitué d'une machine de traitement de plastique et d'un appareil périphérique

(30) Priorität: 20.10.2010 DE 102010049069
(43) Veröffentlichungstag der Anmeldung: 02.05.2012
(73) Patentinhaber: Wittmann Battenfeld GmbH, 2542 Kottingbrunn (AT)
(72) Erfinder: Brunbauer, Klaus, 2540 Bad Voeslau (AT); Kalender, Thomas, Dr., 2123 Wolfpassing / Hochleiten (AT)
(74) Vertreter: Gosdin, Michael

(56) Entgegenhaltungen:
- US-A1- 2003 228 386
- US-A1- 2005 258 795
- US-A1- 2010 102 770

## Beschreibung

Die Erfindung betrifft ein System bestehend aus einer Kunststoffverarbeitungsmaschine, insbesondere einer Spritzgießmaschine, und einem Peripheriegerät, insbesondere einer Handhabungseinrichtung, wobei das Peripheriegerät mindestens einen elektrischen Verbraucher aufweist, wobei die Kunststoffverarbeitungsmaschine mindestens einen elektrischen Verbraucher aufweist und wobei das Peripheriegerät zur Versorgung mit elektrischer Energie mit einem elektrischen Wechselstromnetz in Verbindung steht.

Ein gattungsgemäßes System wird in der DE 10 2007 020 653 A1 offenbart. Systeme dieser Art werden als Fertigungszellen zur Herstellung von Kunststoffformteilen eingesetzt, wobei zwecks Erzielung einer hohen Effizienz die Kunststoffverarbeitungsmaschine, z. B. die Spritzgießmaschine, mit einem Peripheriegerät in Verbindung steht, d. h. quasi mit diesem verkettet ist. Bei dem Peripheriegerät kann es sich insbesondere um eine Handhabungseinrichtung, d. h. um ein Robotersystem handeln, mit dem fertig gespritzte Formteile automatisch aus der Spritzgießmaschine entnommen werden.

Aus der DE 10 2008 027 754 A1 ist eine Steuervorrichtung zum Steuern eines Roboterkörpers mit einer Power-Off-Bremse bekannt. Ziel ist es hier, eine solche Steuervorrichtung mit einem Servomotor und einer Power-Off-Bremse so auszubilden, dass eine schnelle Bewegung des Roboterkörpers bei gelöster Bremse reduziert werden kann, ohne die Komplexität des Aufbaus des Roboters zu erhöhen.

Eine weitere vorbekannte Lösung gemäß der US 2005/0258795 A1 zeigt ein System, das gleichermaßen gattungsgemäß ausgestaltet ist. Dies gilt auch für die US 2010/0102770 U1. Eine andere Lösung zeigt die US 2003/0228386 A1.

Die Energieeffizienz derartiger Systeme, insbesondere im Falle der Verbindung einer Spritzgießmaschine mit einem Handhabungssystem, gewinnt immer mehr an Bedeutung. Dies betrifft sowohl den Einsatz von elektrischen Spritzgießmaschinen, bei denen die diversen Stell- bzw. Verfahrbewegungen mittels elektrischer Motoren, insbesondere Servomotoren, ausgeführt werden; gleichermaßen gilt dies aber auch für hydraulische Spritzgießmaschinen, bei denen die Stell- bzw. Verfahrbewegungen durch hydraulische Kolben-Zylinder-Systeme bewerkstelligt werden. Selbst bei sehr verbrauchsarmen Kunststoffverarbeitungsmaschinen wird nach weiteren Möglichkeiten gesucht, um die Energieeffizienz zu erhöhen.

Der Erfindung liegt daher die **Aufgabe** zugrunde, ein System der eingangs genannten Art so fortzubilden, dass die Energieeffizienz des Systems weiter erhöht werden kann.

Die **Lösung** dieser Aufgabe sieht ein gattungsgemäßes System vor, bei dem mindestens einer der elektrischen Verbraucher des Peripheriegeräts auch für einen Generatorbetrieb zur Umwandlung kinetischer Energie in elektrische Energie ausgebildet ist, wobei mindestens ein elektrischer Verbraucher der Kunststoffverarbeitungsmaschine elektrisch mit einem der generatorisch arbeitenden elektrischen Verbraucher des Peripheriegeräts in Verbindung bringbar ist und bei dem das elektrische Wechselstromnetz über einen Gleichrichter mit einem Gleichstromzwischenkreis verbunden ist, wobei zumindest ein Teil der elektrischen Verbraucher des Peripheriegeräts und der Kunststoffverarbeitungsmaschine mit dem Gleichstromzwischenkreis elektrisch verbunden ist und aus diesem mit elektrischer Energie versorgbar ist und bei dem zumindest ein Teil der für einen Generatorbetrieb ausgebildeten elektrischen Verbraucher des Peripheriegeräts zur Einspeisung generatorisch erzeugter elektrischer Energie mit dem Gleichstromzwischenkreis in elektrischer Verbindung stehen, wobei mindestens ein elektrischer Verbraucher an den Gleichstromzwischenkreis elektrisch gekoppelt ist, wobei die Energieentnahme des elektrischen Verbrauchers aus dem Gleichstromzwischenkreis mittels eines Halbleiterschaltelements gesteuert ist, wobei der elektrische Verbraucher vorzugsweise ein Heizelement der Kunststoffverarbeitungsmaschine ist, wobei das Halbleiterschaltelement mit mindestens einem Sensor zur Erfassung eines Betriebsparameters des elektrischen Verbrauchers in Verbindung steht, wobei das Halbleiterschaltelement einen ersten Vergleicher zum Vergleichen des vom Sensor gemessenen Werts des Betriebsparameters mit einem vorgegebenen Wert für den Betriebsparameter umfasst, wobei das Halbleiterschaltelement eine erste Recheneinheit zur Ermittlung einer benötigten Einschaltdauer für den elektrischen Verbraucher zum Einhalten des vorgegebenen Werts für den Betriebsparameter umfasst, wobei das Halbleiterschaltelement einen zweiten Vergleicher zum Vergleichen des vom Spannungsmesser gemessenen Werts der Zwischenkreisspannung mit einem vorgegebenen maximalen Wert für die Zwischenkreisspannung umfasst und wobei das Halbleiterschaltelement eine zweite Recheneinheit zur Ermittlung einer benötigten Einschaltdauer für den elektrischen Verbraucher zum Einhalten des maximalen Werts für die Zwischenkreisspannung umfasst, wobei erfindungsgemäß vorgesehen ist, dass die erste und die zweite Recheneinheit mit einem Maximalwertbildner verbunden sind, der den größeren der beiden Werte für die Einschaltdauer ermittelt, wobei der Maximalwertbildner ausgebildet ist, um eine vorgegebene Einschaltdauer für den elektrischen Verbraucher vorzugeben.

Weiterhin kann mindestens ein Speicherelement für elektrische Energie, insbesondere ein Kondensator mit großer Kapazität, mit dem Gleichstromzwischenkreis elektrisch verbunden sein.

Ein Steuerstromkreis kann elektrisch über ein Schaltnetzteil mit dem Gleichstromzwischenkreis in Verbindung stehen. In diesem Falle kann vorgesehen sein, dass mindestens ein elektrischer Verbraucher mit dem Steuerstromkreis elektrisch in Verbindung steht, wobei der elektrische Verbraucher vorzugsweise eine Maschinensteuerung (CPU), eine Bedieneinheit (MMI), ein Steuerteil eines Servoumrichters, ein Sensor, eine Meldelampe, ein Schütz, ein Schalter, ein Ventil, ein Magnet und/oder ein Lüfter ist.

Das Halbleiterschaltelement kann ein Bipolartransistor mit isolierter Gate-Elektrode (Insulated Gate Bipolar Transistor, IGBT) sein oder einen solchen umfassen. Das Halbleiterschaltelement kann auch mit mindestens einem Spannungsmesser zur Erfassung der Gleichstromzwischenkreisspannung in Verbindung stehen.

Ein nicht erfindungsgemäßes Verfahren zum Betreiben eines solchen Systems bestehend aus einer Kunststoffverarbeitungsmaschine, insbesondere aus einer Spritzgießmaschine, und einem Peripheriegerät, insbesondere einer Handhabungseinrichtung, sieht vor, dass mindestens einer der elektrischen Verbraucher des Peripheriegeräts auch für einen Generatorbetrieb zur Umwandlung kinetischer

Energie in elektrische Energie ausgebildet ist, wobei mit diesen Verbrauchern gewonnene elektrische Energie zur Versorgung des mindestens einen elektrischen Verbrauchers der Kunststoffverarbeitungsmaschine genutzt wird und wobei elektrische Energie aus dem elektrischen Wechselstromnetz über einen Gleichrichter in einen Gleichstromzwischenkreis eingespeist wird, wobei zumindest ein Teil der elektrischen Verbraucher des Peripheriegeräts und der Kunststoffverarbeitungsmaschine mit dem Gleichstromzwischenkreis elektrisch verbunden ist und aus diesem mit elektrischer Energie versorgt werden und wobei zumindest ein Teil der für einen Generatorbetrieb ausgebildeten elektrischen Verbraucher des Peripheriegeräts aus kinetischer Energie generatorisch gewonnene elektrische Energie in den Gleichstromzwischenkreis einspeisen.

Beim Betrieb des Systems wird bevorzugt elektrische Energie in einem Speicherelement für elektrische Energie, insbesondere in einem Kondensator, zwischengespeichert, der mit dem Gleichstromzwischenkreis elektrisch verbunden ist. In diesem Falle kann vorgesehen werden, dass aus dem elektrischen Wechselstromnetz solange keine Energie entnommen wird, wie die elektrische Spannung in dem Gleichstromzwischenkreis über einem vorgegebenen Wert liegt, wobei der vorgegebene Wert insbesondere die elektrische Spannung im Gleichrichter ist.

Eine weitere vorteilhafte Ausgestaltung des nicht erfindungsgemäßen Verfahrens sieht vor, dass zum generatorischen Betrieb geeignete elektrische Verbraucher in Form von Servomotoren verwendet werden, wobei diese einen Servoumrichter mit einem Bremstransistor, insbesondere in Form eines Halbleiterbauelements oder eines Bipolartransistors mit isolierter Gate-Elektrode (Insulated Gate Bipolar Transistor, IGBT), aufweisen, wobei der Bremstransistor zur Ansteuerung eines weiteren elektrischen Verbrauchers verwendet wird.

Das vorgeschlagene System der Rückgewinnung kinetischer Energie bei einem gattungsgemäßen System ist geeignet, einen verbesserten Energiehaushalt zu erreichen. Vorgesehen ist, dass die kinetische Energie, die bei Verzögerungs- bzw. Bremsvorgängen elektrisch angetriebener Achsen anfällt, rückgewonnen wird und genutzt wird, um Verbraucher der Kunststoffverarbeitungsmaschine zu versorgen.

Insofern ergibt sich in vorteilhafter Weise eine Kostenersparnis betreffend die Energiekosten.

Mit der vorgeschlagenen Ausgestaltung wird es weiterhin möglich, dass die elektrische Anschlussleistung des Systems, bestehend aus Kunststoffverarbeitungsmaschine (Spritzgießmaschine) und Peripheriegerät (Handhabungsroboter), reduziert werden kann. Hierdurch können Kosten reduziert werden, die für den elektrischen Netzanschluss, für den Hauptschalter, für Kabelquerschnitte etc. ansonsten nötig sind.

Der Erfindungsvorschlag erbringt weiterhin Vorteile bei Netzausfall. Die im vorgeschlagenen Konzept enthaltene Versorgung des Schaltnetzteiles für den Steuerstromkreis aus dem Gleichstromzwischenkreis ermöglicht es, alle Achsen des Systems kontrolliert bei Netzausfall zum Stillstand zu bringen, da der Steuerstromkreis für Antriebe, für die Maschinensteuerung und für die gesamte Elektrik des Systems bis zum Stillstand aufrecht erhalten werden kann. Ein Maschinenschaden durch Netzausfall (insbesondere eine Kollision mit mechanischen Endlagen beim Austrudeln) kann somit verhindert werden.

Bei den Peripheriegeräten handelt es sich bevorzugt um Handhabungseinrichtungen, d. h. um Robotersysteme. Allerdings können als Peripheriegeräte auch diverse andere Einrichtungen zum Einsatz kommen, die mindestens eine "elektrische angetriebene Achse" aufweisen, d. h. einen elektrischen Antrieb eines Elements, der auch generatorisch betrieben werden kann. Beispielsweise kann es sich bei derartigen Peripheriegeräten um Fördergeräte oder um Drehteller handeln, die Zusatzfunktionen für den Kunststoffverarbeitungsprozess ausführen.

Sehr vorteilhaft ist, dass auf diese Weise auch bei hydraulisch betriebenen Spritzgießmaschinen im Zusammenspiel mit einem Peripheriegerät (Handhabungsroboter) eine verbesserte Energieeffizienz erreichbar ist. Natürlich ist das vorgeschlagene Prinzip aber auch bei elektrischen Spritzgießmaschinen nutzbar.

Die Schnittstellen zwischen Kunststoffverarbeitungsmaschine und Peripheriegerät sind einfach ausgeführt und daher leicht realisierbar. Kostengünstig ist ein digitaler Ausgang an der Spritzgießmaschine, der zumeist bereits vorhanden ist.

Die Bremsenergie kann durch das 24 VDC Zwischenkreisnetzteil vorteilhaft abgeführt werden. Das Peripheriegerät kann bei Netzausfall kontrolliert zum Stillstand gebracht werden.

In der Zeichnung ist ein Ausführungsbeispiel der Erfindung dargestellt. Es zeigen:
- Fig. 1: schematisch das elektrische Schaltbild eines Systems, bestehend aus einer Spritzgießmaschine und einer Handhabungseinrichtung, und
- Fig. 2: ein elektronisches Halbleiterschaltelement gemäß einer bevorzugten Ausführungsform.

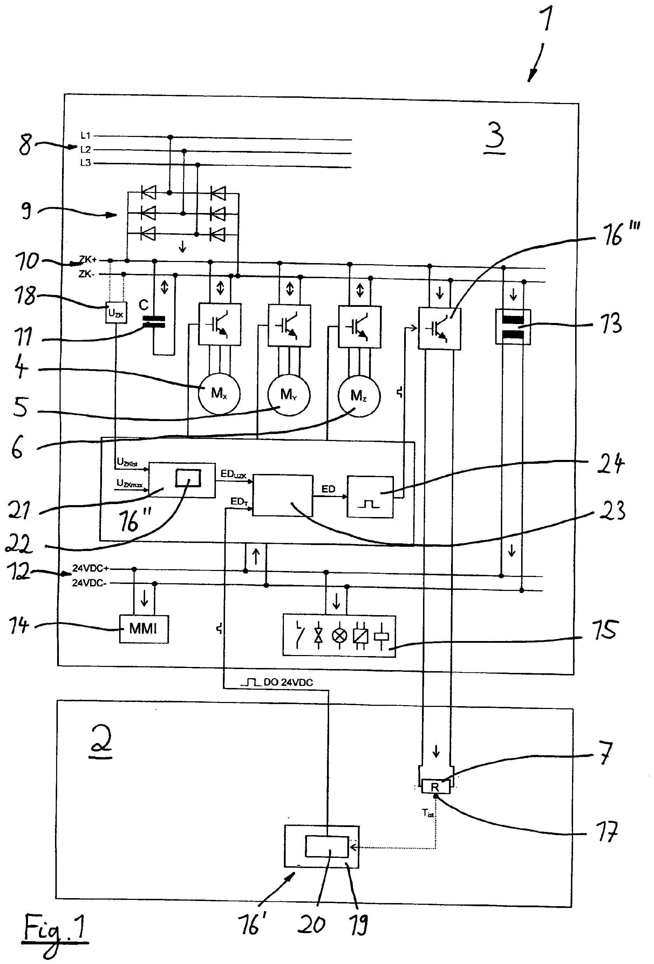

In Fig. 1 ist ein elektrisches Schaltbild skizziert, das zu einem System 1 gehört, das eine Kunststoffverarbeitungsmaschine 2 in Form einer Spritzgießmaschine und ein Peripheriegerät 3 in Form einer Handhabungseinrichtung (Entnahmeroboter) umfasst. Die Spritzgießmaschine ist hier als hydraulische Spritzgießmaschine ausgebildet, d. h. die maßgeblichen Stellbewegungen und das Aufbringen der Werkzeugzuhaltekraft werden durch hydraulische Kolben-Zylinder-Elemente realisiert.

Das Peripheriegerät 3 hat mehrere elektrische Verbraucher 4, 5, 6, bei denen es sich im vorliegenden Fall um die elektrischen Antriebe dreier Achsen handelt. Auch die Spritzgießmaschine 2 hat einen elektrischen Verbraucher 7 in Form eines Heizelements, das für die Plastifizierung von Kunststoffmaterial benötigt wird.

Die elektrischen Antriebe 4, 5, 6 des Peripheriegeräts 3 sind auch geeignet, um generatorisch betrieben zu werden, d. h. aus kinetischer Energie elektrische Energie zu gewinnen.

Bei dem elektrischen Verbraucher 7 (Heizelement) handelt es sich um ein Element, das für hohe Spannungen geeignet ist, insbesondere für Spannungen von größer oder gleich 900 VDC. Ferner ist der Verbraucher 7 geeignet zur Aufnahme von hohen, jedoch nur kurzzeitig wirksamen Leistungsspitzen, insbesondere von mindestens 30 kW über einen Zeitraum von mindestens 250 ms.

Das System 1 und namentlich das Peripheriegerät 3 wird aus einem Wechselstromnetz 8 mit Energie versorgt, das - wie angedeutet - dreiphasig ist. Die drei Phasen Wechselstrom werden über einen Gleichrichter 9 in Gleichstrom umgewandelt und an einen Gleichstromzwischenkreis 10 geleitet. Die elektrischen Verbraucher 4, 5, 6 und 7 sind - wie zu sehen - alle elektrisch mit dem Gleichstromzwischenkreis 10 verbunden.

Der Gleichrichter 9 speist also aus dem Wechselstromnetz 8 den gemeinsamen Gleichstromzwischenkreis 10, aus dem alle Antriebe bzw. sonstigen Verbraucher versorgt werden. Über diesen Gleichstromzwischenkreisverbund kann bereits ein Energieaustausch stattfinden, wenn z. B. ein Antrieb verzögert (gebremst) wird, hierdurch generatorisch arbeitet und Energie in den Gleichstromzwischenkreis 10 einspeist, die von einem anderen Verbraucher entnommen werden kann, z. B. zum Beschleunigen einer anderen Achse des Peripheriegeräts oder der Kunststoffverarbeitungsmaschine, insbesondere des Heizelements 7.

Der Gleichstromzwischenkreis 10 ist mit einem elektrischen Speicherelement 11 (Energiespeicher) in Form eines Kondensators hoher Kapazität elektrisch verbunden. Bei Bremsvorgängen wird der Kondensator 11 geladen, wodurch die Zwischenkreisspannung U_{ZK} ansteigt. Solange die Spannung des Kondensators 11 über dem Wert des Gleichrichters 9 (d. h. über der Gleichrichterspannung) liegt, wird keine Energie aus dem Wechselstromnetz 8 entnommen, sondern das gesamte System wird elektrisch aus dem Kondensator versorgt.

Ein für den Betrieb des Peripheriegeräts 3 und/oder der Spritzgießmaschine 2 erforderlicher Steuerstromkreis 12 wird über ein Schaltnetzteil 13 zur Erzeugung einer Steuerspannung (z. B. 24 VDC) aus dem Gleichstromzwischenkreis 10 mit elektrischer Energie versorgt, und zwar ausschließlich vom Gleichstromzwischenkreis 10. Hierdurch wird dem Gleichstromzwischenkreis 10 permanent Energie entnommen, also auch in Phasen, in denen ausschließlich Bremsvorgänge von Antrieben stattfinden. Der Steuerstromkreis 12 versorgt eine Vielzahl von elektrischen Verbrauchern 14, 15, wie z. B. Maschinensteuerungen (CPU; Steuerung bzw. Recheneinheit), eine Bedieneinheit (MMI; Bildschirm, Eingabeeinheit), ein Steuerteil eines Servoumrichters (CPU), Sensoren, Meldelampen, Schütze, Schalter, Ventile, Magnete etc. Diese elektrischen Verbraucher 14, 15 stellen einen nicht unerheblichen Anteil am Gesamtenergieverbrauch dar (z. B. 500 W).

Ein Verbraucher, im Ausführungsbeispiel exemplarisch dargestellt für den Verbraucher 7 in Form eines Heizbandes einer Zone der Heizung des Plastifizierzylinders, kann mittels eines Halbleiterschaltelements 16', 16", 16''' an den Gleichstromzwischenkreis 10 geschaltet werden. Das Halbleiterschaltelement 16', 16", 16''' kann innerhalb der Maschinensteuerung angeordnet sein; nur beispielhaft dargestellt ist, dass die einzelnen Komponenten des Halbleiterschaltelements im System 1 räumlich verteilt angeordnet sind.

Bei dem Halbleiterschaltelement 16', 16", 16''' handelt es sich im Ausführungsbeispiel um einen Bipolartransistor mit isolierter Gate-Elektrode (insulated-gate bipolar transistor, kurz IGBT). Dies ist ein Halbleiterbauelement, das in der Leistungselektronik verwendet wird, da es Vorteile des Bipolartransistors (gutes Durchlassverhalten, hohe Sperrspannung, Robustheit) und Vorteile eines Feldeffekttransistors (nahezu leistungslose Ansteuerung) vereinigt. Vorteilhaft ist auch eine gewisse Robustheit gegenüber Kurzschlüssen, da der IGBT den Laststrom begrenzt.

Der Verbraucher 7 ist dabei so beschaffen, dass er für die hohe bzw. höchst zulässige Spannung des Gleichstromzwischenkreises (z. B. 900 VDC) geeignet ist, kurzzeitig (z. B. für 250 ms) hohe Leistungsspitzen (z. B. 30 kW) aufnehmen kann und dabei seinen eigentlichen Zweck (vorliegend: das Heizen einer Zone des Plastifizierzylinders) hinsichtlich der Nennleistung erfüllen kann.

Damit hat der Verbraucher 7 zwei Aufgaben: Zum einen steht er für den Energieabbau im Gleichstromzwischenkreis 10 zur Verfügung, wenn in Bremsphasen alle anderen Elemente (Antriebe 4, 5, 6, Energiespeicher 11, Steuerstromkreis 12) dem Gleichstromzwischenkreis 10 nicht genügend Energie entnehmen, um die Zwischenkreisspannung nicht über den maximal zulässigen Wert ansteigen zu lassen. Zum anderen hat der Verbraucher dann natürlich seine ursprüngliche Aufgabe, vorliegend also das Heizen einer Zone der Plastifiziereinheit.

Das Halbleiterschaltelement 16', 16", 16''' besteht im Ausführungsbeispiel aus drei Teilen.

Das erste Teil 16' ist im Bereich der Spritzgießmaschine 2 angeordnet und steht mit der Temperaturregelung des Heizelements 7 im Kontext; dieser Teil des Halbleiterschaltelements kann Bestandteil der Maschinensteuerung sein, der für die Temperaturregelung vorgesehen ist.

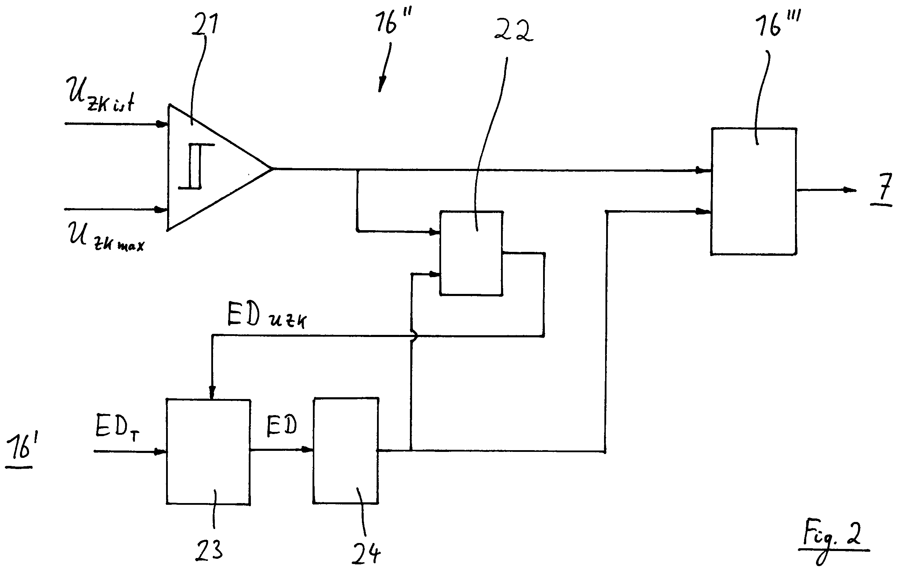

Das zweite und dritte Teil 16" und 16''' ist in Fig. 2 mit den wesentlichen Elementen im Einzelnen dargestellt. Dieser Teil des Halbleiterschaltelements erfasst mittels eines Sensors 17 (über das erste Teil 16' des Halbleiterschaltelements) vorliegend die Temperatur T des Heizelements 7, d. h. die Ist-Temperatur Tᵢₛₜ. Außerdem wird mittels eines Spannungsmessers 18 die Ist-Zwischenkreisspannung U_{ZKist} gemessen und dem Halbleiterschaltelement 16" zugeleitet. Aus nicht weiter dargestellten Speichermitteln werden dem Halbleiterschaltelement 16' dann die Soll-Temperatur T_{Soll} des Heizelements 7 und dem Halbleiterschaltelement 16" die maximal zulässige Zwischenkreisspannung U_{ZKmax} zugeleitet.

In einem ersten Vergleicher 19 wird die Temperaturdifferenz zwischen Soll- und Ist-Temperatur ermittelt und in einer sich anschließenden ersten Recheneinheit 20 wird errechnet, wie lange eine Einschaltdauer ED_{T} des Heizelements 7 sein muss, um die Soll-Temperatur zu erreichen.

Ferner wird in einem zweiten Vergleicher 21 die Differenz zwischen der gemessenen Zwischenkreisspannung U_{ZKist} und der maximal zulässigen Zwischenkreisspannung U_{ZKmax} ermittelt und in einer sich anschließenden zweiten Recheneinheit 22 berechnet, wie lange eine Einschaltdauer ED_{UZK} für den Verbraucher 7 sein müsste, um den maximal zulässigen Spannungswert nicht zu überschreiten.

Beide Werte der Einschaltdauer ED_{T} (für die Zylindertemperaturregelzone) und ED_{UZK} (für die Zwischenkreisspannungsbegrenzung) werden nunmehr einem Maximalwertbildner 23 zugeleitet. In dieser Funktionseinheit wird die jeweils größere Einschaltdauer ED ermittelt und an einen Funktionsblock 24 weitergegeben.

Die Einschaltdauer ED_{UZK} wird somit also von ED_{T} mit einbezogen bzw. berücksichtigt. Die resultierende Einschaltdauer ED wird im Funktionsblock 24 in ein Steuersignal (Pulsweitenmodulation PWM) umgesetzt und zum dritten Teil 16''' des Halbleiterschaltelements weitergeleitet, wo die Leistungsentnahme aus dem Gleichstromzwischenkreis 10 durch den Verbraucher 7 entsprechend gesteuert wird, d. h. unter Berücksichtigung der entsprechenden Parameter des Verbrauchers 7 werden die Einschaltimpulse an das Halbleiterbauelement 16''' ausgegeben und damit der Verbraucher 7 betrieben.

Das Ausführungsbeispiel gemäß Fig. 2 sieht vor, dass als zweiter Vergleicher 21 ein Hystereseregler eingesetzt wird (z. B. einschalten bei 870 V, ausschalten bei 830 V).

Das Halbleiterschaltelement 16 dient also einerseits zur Begrenzung der Gleichstromzwischenkreisspannung bzw. zum Energieabbau im Gleichstromzwischenkreis und andererseits gleichzeitig zur Regelung eines Betriebsparameters, z. B. zur Temperaturregelung einer Heizung im Plastifizierzylinder.

Eine Möglichkeit, zusätzlich Kosten zu reduzieren, bietet sich an, wenn man den bei vielen Servoumrichtern serienmäßig vorhandenen Bremstransistor (Halbleiterbauelement bzw. IGBT) zur Ansteuerung eines Verbrauchers (z. B. einer Zone der Plastifizierzylinderheizung) verwendet. Dadurch entfällt das üblicherweise hierfür verbaute Solid State Relais.

In Fig. 1 geben die Pfeile die Richtung an, in denen Energie fließt. Das Wechselstromnetz 8 hat typischer Weise eine Spannung von 400 VAC. Im Gleichstromzwischenkreis 10 werden beispielsweise Spannungen von ca. 560 VDC angestrebt. Der Steuerstromkreis 12 wird zumeist mit 24 VDC betrieben.

In Standardrobotern entstehen zumeist Bremsleistungen zwischen 200 und 400 W, wobei auch Werte bis 800 W auftreten können. Die Heizbandverluste im laufenden Betrieb einer Spritzgießmaschine liegen in derselben Größenordnung, was das vorgeschlagene System sehr vorteilhaft macht.

### Bezugszeichenliste:

- 1: System
- 2: Kunststoffverarbeitungsmaschine (Spritzgießmaschine)
- 3: Peripheriegerät (Handhabungseinrichtung)
- 4: elektrischer Verbraucher (Motor)
- 5: elektrischer Verbraucher (Motor)
- 6: elektrischer Verbraucher (Motor)
- 7: elektrischer Verbraucher (Heizelement)
- 8: Wechselstromnetz
- 9: Gleichrichter
- 10: Gleichstromzwischenkreis
- 11: Speicherelement (Kondensator)
- 12: Steuerstromkreis
- 13: Schaltnetzteil
- 14: elektrischer Verbraucher (Bedieneinheit MMI)
- 15: elektrischer Verbraucher
- 16', 16", 16''': Halbleiterschaltelement (IGBT)
- 17: Sensor
- 18: Spannungsmesser
- 19: erster Vergleicher
- 20: erste Recheneinheit
- 21: zweiter Vergleicher
- 22: zweite Recheneinheit
- 23: Maximalwertbildner
- 24: Funktionsblock (zur Pulsweitenmodulation PWM)

## Patentansprüche

1. System (1) bestehend aus einer Kunststoffverarbeitungsmaschine (2), insbesondere einer Spritzgießmaschine, und einem Peripheriegerät (3), insbesondere einer Handhabungseinrichtung, wobei das Peripheriegerät (3) mindestens einen elektrischen Verbraucher (4, 5, 6) aufweist, wobei die Kunststoffverarbeitungsmaschine (2) mindestens einen elektrischen Verbraucher (7) aufweist und wobei das Peripheriegerät (3) zur Versorgung mit elektrischer Energie mit einem elektrischen Wechselstromnetz (8) in Verbindung steht,
wobei mindestens einer der elektrischen Verbraucher (4, 5, 6) des Peripheriegeräts (3) auch für einen Generatorbetrieb zur Umwandlung kinetischer Energie in elektrische Energie ausgebildet ist, wobei mindestens ein elektrischer Verbraucher (7) der Kunststoffverarbeitungsmaschine (2) elektrisch mit einem der generatorisch arbeitenden elektrischen Verbraucher (4, 5, 6) des Peripheriegeräts (3) in Verbindung bringbar ist und wobei das elektrische Wechselstromnetz (8) über einen Gleichrichter (9) mit einem Gleichstromzwischenkreis (10) verbunden ist, wobei zumindest ein Teil der elektrischen Verbraucher (4, 5, 6, 7) des Peripheriegeräts (3) und der Kunststoffverarbeitungsmaschine (2) mit dem Gleichstromzwischenkreis (10) elektrisch verbunden ist und aus diesem mit elektrischer Energie versorgbar ist und wobei zumindest ein Teil der für einen Generatorbetrieb ausgebildeten elektrischen Verbraucher (4, 5, 6) des Peripheriegeräts (3) zur Einspeisung generatorisch erzeugter elektrischer Energie mit dem Gleichstromzwischenkreis (10) in elektrischer Verbindung stehen,
wobei mindestens ein elektrischer Verbraucher (7) der Kunststoffverarbeitungsmaschine (2) an den Gleichstromzwischenkreis (10) elektrisch gekoppelt ist, wobei die Energieentnahme des elektrischen Verbrauchers (7) der Kunststoffverarbeitungsmaschine (2) aus dem Gleichstromzwischenkreis (10) mittels eines Halbleiterschaltelements (16', 16", 16''') gesteuert ist, wobei der elektrische Verbraucher (7) der Kunststoffverarbeitungsmaschine (2) vorzugsweise ein Heizelement der Kunststoffverarbeitungsmaschine (2) ist,
wobei das Halbleiterschaltelement (16', 16", 16''') mit mindestens einem Sensor (17) zur Erfassung eines Betriebsparameters des elektrischen Verbrauchers (7) der Kunststoffverarbeitungsmaschine (2) in Verbindung steht, wobei das Halbleiterschaltelement (16', 16", 16''') einen ersten Vergleicher (19) zum Vergleichen des vom Sensor (17) gemessenen Werts des Betriebsparameters mit einem vorgegebenen Wert für den Betriebsparameter umfasst,
wobei das Halbleiterschaltelement (16', 16", 16''') eine erste Recheneinheit (20) zur Ermittlung einer benötigten Einschaltdauer (ED_{T}) für den elektrischen Verbraucher (7) der Kunststoffverarbeitungsmaschine (2) zum Einhalten des vorgegebenen Werts für den Betriebsparameter umfasst,
wobei das Halbleiterschaltelement (16', 16", 16''') einen zweiten Vergleicher (21) zum Vergleichen des von einem Spannungsmesser (18) gemessenen Werts der Zwischenkreisspannung (U_{ZK}) mit einem vorgegebenen maximalen Wert für die Zwischenkreisspannung (U_{ZKmax}) umfasst und
wobei das Halbleiterschaltelement (16', 16", 16''') eine zweite Recheneinheit (22) zur Ermittlung einer benötigten Einschaltdauer (ED_{UZK}) für den elektrischen Verbraucher (7) der Kunststoffverarbeitungsmaschine (2) zum Einhalten des maximalen Werts für die Zwischenkreisspannung (U_{ZK}) umfasst,
**dadurch gekennzeichnet, dass**
die erste und die zweite Recheneinheit (20, 22) mit einem Maximalwertbildner (23) verbunden sind, der eingerichtet ist, den größeren der beiden Werte für
die Einschaltdauer (ED_{T}, ED_{UZK}) zu ermitteln, wobei der Maximalwertbildner (23) ausgebildet ist, um eine vorgegebene Einschaltdauer (ED) für den elektrischen Verbraucher (7) der Kunststoffverarbeitungsmaschine (2) vorzugeben.

2. System nach Anspruch 1, **dadurch gekennzeichnet, dass** mindestens ein Speicherelement (11) für elektrische Energie, insbesondere ein Kondensator, mit dem Gleichstromzwischenkreis (10) elektrisch verbunden ist.

3. System nach Anspruch 1 oder 2, **dadurch gekennzeichnet, dass** ein Steuerstromkreis (12) elektrisch über ein Schaltnetzteil (13) mit dem Gleichstromzwischenkreis (10) in Verbindung steht.

4. System nach Anspruch 3, **dadurch gekennzeichnet, dass** mindestens ein elektrischer Verbraucher (14, 15) mit dem Steuerstromkreis (12) elektrisch in Verbindung steht, wobei der elektrische Verbraucher (14, 15) vorzugsweise eine Maschinensteuerung (CPU), eine Bedieneinheit (MMI), ein Steuerteil eines Servoumrichters, ein Sensor, eine Meldelampe, ein Schütz, ein Schalter, ein Ventil, ein Magnet und/oder ein Lüfter ist.

5. System nach einem der Ansprüche 1 bis 4, **dadurch gekennzeichnet, dass** das Halbleiterschaltelement (16', 16", 16''') ein Bipolartransistor mit isolierter Gate-Elektrode ist oder einen solchen umfasst.

6. System nach einem der Ansprüche 1 bis 5, **dadurch gekennzeichnet, dass** das Halbleiterschaltelement (16', 16", 16''') mit mindestens einem Spannungsmesser (18) zur Erfassung der Gleichstromzwischenkreisspannung (U_{ZK}) in Verbindung steht.

## Claims

1. System (1) consisting of a plastics-processing machine (2), in particular an injection moulding machine, and a peripheral unit (3), in particular a handling device, wherein the peripheral unit (3) has at least one electrical consumer (4, 5, 6), wherein the plastics-processing machine (2) has at least one electrical consumer (7) and wherein the peripheral unit (3) is connected to an electric AC grid (8) in order to be supplied with electrical energy,
wherein at least one of the electrical consumers (4, 5, 6) of the peripheral unit (3) is also designed for generator operation to convert kinetic energy to electrical energy, wherein at least one electrical consumer (7) of the plastics-processing machine (2) can be electrically connected to one of the electrical consumers (4, 5, 6) of the peripheral unit (3) that operate by way of generator and wherein the electric AC grid (8) is connected to a DC intermediate circuit (10) via a rectifier (9), wherein at least some of the electrical consumers (4, 5, 6, 7) of the peripheral unit (3) and of the plastics-processing machine (2) are electrically connected to the DC intermediate circuit (10) and can be supplied with electrical energy therefrom and wherein at least some of the electrical consumers (4, 5, 6) of the peripheral unit (3) that are formed for generator operation are electrically connected to the DC intermediate circuit (10) to feed in electrical energy generated by way of generator,
wherein at least one electrical consumer (7) of the plastics-processing machine (2) is electrically coupled to the DC intermediate circuit (10), wherein the energy draw of the electrical consumer (7) of the plastics-processing machine (2) from the DC intermediate circuit (10) is controlled by means of a semiconductor switching element (16', 16'', 16'''),
wherein the electrical consumer (7) of the plastics-processing machine (2) is preferably a heating element of the plastics-processing machine (2),
wherein the semiconductor switching element (16', 16'', 16''') is connected to at least one sensor (17) for detecting an operating parameter of the electrical consumer (7) of the plastics-processing machine (2), wherein the semiconductor switching element (16', 16'', 16''') comprises a first comparator (19) for comparing the value of the operating parameter measured by the sensor (17) with a prescribed value for the operating parameter,
wherein the semiconductor switching element (16', 16'', 16''') comprises a first computation unit (20) for ascertaining a required switch-on period (ED_{T}) for the electrical consumer (7) of the plastics-processing machine (2) for satisfying the prescribed value for the operating parameter,
wherein the semiconductor switching element (16', 16'', 16''') comprises a second comparator (21) for comparing the value of the intermediate circuit voltage (U_{ZK}) measured by a voltmeter (18) with a prescribed maximum value for the intermediate circuit voltage (U_{ZKmax}) and wherein the semiconductor switching element (16', 16'', 16''') comprises a second computation unit (22) for ascertaining a required switch-on period (ED_{UZK}) for the electrical consumer (7) of the plastics-processing machine (2) for satisfying the maximum value for the intermediate circuit voltage (U_{ZK}),
**characterized in that**
the first and the second computation unit (20, 22) are connected to a maximum value former (23), which is configured to ascertain the greater of the two values for the switch-on period (ED_{T}, ED_{UZK}), wherein the maximum value former (23) is designed to prescribe a prescribed switch-on period (ED) for the electrical consumer (7) of the plastics-processing machine (2).

2. System according to Claim 1, **characterized in that** at least one storage element (11) for electrical energy, in particular a capacitor, is electrically connected to the DC intermediate circuit (10).

3. System according to Claim 1 or 2, **characterized in that** a control circuit (12) is electrically connected to the DC intermediate circuit (10) via a switched-mode power supply (13).

4. System according to Claim 3, **characterized in that** at least one electrical consumer (14, 15) is electrically connected to the control circuit (12), wherein the electrical consumer (14, 15) is preferably a machine control system (CPU), an operator control unit (MMI), a control part of a servo converter, a sensor, a warning lamp, a contactor, a switch, a valve, a magnet and/or a fan.

5. System according to one of Claims 1 to 4, **characterized in that** the semiconductor switching element (16', 16'', 16''') is an insulated-gate bipolar transistor or comprises same.

6. System according to one of Claims 1 to 5, **characterized in that** the semiconductor switching element (16', 16'', 16''') is connected to at least one voltmeter (18) for detecting the DC intermediate circuit voltage (U_{ZK}).

## Revendications

1. Système (1), composé d'une machine de transformation de matière plastique (2), notamment une machine de moulage par injection, et d'un appareil périphérique (3), notamment d'un dispositif de manipulation, l'appareil périphérique (3) possédant au moins un récepteur électrique (4, 5, 6), la machine de transformation de matière plastique (2) possédant au moins un récepteur électrique (7) et l'appareil périphérique (3) étant en liaison avec un réseau électrique à courant alternatif (8) pour l'alimentation en énergie électrique,
au moins l'un des récepteurs électriques (4, 5, 6) de l'appareil périphérique (3) étant également configuré pour un fonctionnement en générateur servant à convertir de l'énergie cinétique en énergie électrique, au moins un récepteur électrique (7) de la machine de transformation de matière plastique (2) pouvant être amené électriquement en liaison avec l'un des récepteurs électriques (4, 5, 6) de l'appareil périphérique (3) fonctionnant en tant que générateur et le réseau électrique à courant alternatif (8) étant relié à un circuit intermédiaire à courant continu (10) par le biais d'un redresseur (9), au moins une partie des récepteurs électriques (4, 5, 6, 7) de l'appareil périphérique (3) et de la machine de transformation de matière plastique (2) étant reliés électriquement au circuit intermédiaire à courant continu (10) et pouvant être alimentés en énergie électrique à partir de celui-ci et au moins une partie des récepteurs électriques (4, 5, 6) de l'appareil périphérique (3) configurée pour un fonctionnement en générateur se trouvant en liaison électrique avec le circuit intermédiaire à courant continu (10) en vue d'injecter l'énergie électrique générée par la fonction de générateur,
au moins un récepteur électrique (7) de la machine de transformation de matière plastique (2) étant connecté électriquement au circuit intermédiaire à courant continu (10), le prélèvement d'énergie du récepteur électrique (7) de la machine de transformation de matière plastique (2) au circuit intermédiaire à courant continu (10) étant commandé au moyen d'un élément de commutation semiconducteur (16', 16", 16'''),
le récepteur électrique (7) de la machine de transformation de matière plastique (2) étant de préférence un élément chauffant de la machine de transformation de matière plastique (2),
l'élément de commutation semiconducteur (16', 16", 16''') se trouvant en liaison avec au moins un capteur (17) destiné à acquérir un paramètre de fonctionnement du récepteur électrique (7) de la machine de transformation de matière plastique (2),
l'élément de commutation semiconducteur (16', 16", 16''') comportant un premier comparateur (19) destiné à comparer la valeur du paramètre de fonctionnement mesurée par le capteur (17) avec une valeur prédéfinie pour le paramètre de fonctionnement,
l'élément de commutation semiconducteur (16', 16", 16''') comportant une première unité de calcul (20) destinée à déterminer une durée de mise en circuit (ED_{T}) nécessaire au récepteur électrique (7) de la machine de transformation de matière plastique (2) pour respecter la valeur prédéfinie pour le paramètre de fonctionnement,
l'élément de commutation semiconducteur (16', 16", 16''') comportant un deuxième comparateur (21) destiné à comparer la valeur de la tension de circuit intermédiaire (U_{ZK}) mesurée par un voltmètre (18) avec une valeur maximale prédéfinie pour la tension de circuit intermédiaire (U_{ZK}) et
l'élément de commutation semiconducteur (16', 16", 16''') comportant une deuxième unité de calcul (22) destinée à déterminer une durée de mise en circuit (ED_{UZK}) nécessaire au récepteur électrique (7) de la machine de transformation de matière plastique (2) pour respecter la valeur maximale pour la tension de circuit intermédiaire (U_{ZK}),
**caractérisé en ce que**
la première et la deuxième unité de calcul (20, 22) sont reliées à un calculateur de valeur maximale (23) qui est conçu pour déterminer la plus grande des deux valeurs pour la durée de mise en circuit (ED_{T}, ED_{UZK}), le calculateur de valeur maximale (23) étant conçu pour prédéfinir une durée de mise en circuit (ED) prédéfinie pour le récepteur électrique (7) de la machine de transformation de matière plastique (2).

2. Système selon la revendication 1, **caractérisé en ce qu'**au moins un élément d'accumulation (11) pour de l'énergie électrique, notamment un condensateur, est relié électriquement au circuit intermédiaire à courant continu (10).

3. Système selon la revendication 1 ou 2, **caractérisé en ce qu'**un circuit de courant de commande (12) se trouve en liaison électrique avec le circuit intermédiaire à courant continu (10) par le biais d'un bloc d'alimentation à découpage (13).

4. Système selon la revendication 3, **caractérisé en ce qu'**au moins un récepteur électrique (14, 15) se trouve en liaison électrique avec le circuit de courant de commande (12), le récepteur électrique (14, 15) étant de préférence une commande de machine (CPU), une unité de service (MMI), une partie de commande d'un servovariateur, un capteur, un témoin de signalisation, un contacteur, un commutateur, une vanne, un aimant et/ou un ventilateur.

5. Système selon l'une des revendications 1 à 4, **caractérisé en ce que** l'élément de commutation semiconducteur (16', 16", 16''') est un transistor bipolaire à gâchette isolée ou en comporte un.

6. Système selon l'une des revendications 1 à 5, **caractérisé en ce que** l'élément de commutation semiconducteur (16', 16", 16''') se trouve en liaison avec au moins un voltmètre (18) destiné à acquérir la tension de circuit intermédiaire à courant continu (U_{ZK})
